# EUROPÄISCHE PATENTSCHRIFT

(11) **EP 2 409 804 B1**
(45) Veröffentlichungstag und Bekanntmachung des Hinweises auf die Patenterteilung: **11.05.2016**
(21) Anmeldenummer: 11167194.7
(22) Anmeldetag: 24.05.2011
(51) Int. Cl.: B23K 1/005, B23K 3/06

(54) **Verfahren und Vorrichtung zum Laser-Hartlöten**
Laser brazing apparatus and method
Procédé et dispositif de brasage au laser

(30) Priorität: 15.07.2010 DE 102010031383; 20.01.2011 DE 102011002931
(43) Veröffentlichungstag der Anmeldung: 25.01.2012
(73) Patentinhaber: Bayerische Motoren Werke Aktiengesellschaft, 80809 München (DE)
(72) Erfinder: Hain, Roland, 04603 Nobitz (DE); Selig, Martin, 04177 Leipzig (DE)

(56) Entgegenhaltungen:
- DE-A1- 10 213 676
- DE-A1- 10 327 462
- DE-A1-102006 012 064
- DE-B- 1 030 946
- DE-U1-202008 003 661
- US-A- 5 977 512
- US-A1- 2003 168 498

## Beschreibung

Die Erfindung bezieht sich auf ein Verfahren zum Laser-Hartlöten mit externer Zufuhr des Lots nach dem Oberbegriff des Anspruchs 1 und eine Vorrichtung zur Durchführung des Verfahrens nach dem Oberbegriff des Anspruchs 2.

Beim Laser-Hartlöten ohne Flussmittel treffen an der Fügestelle der zu verbindenden Bleche/Bauteile zum Einen der Laserstrahl und das Lot, üblicherweise in Drahtform zugeführt, und zum anderen ein Prozessgas zusammen. Das Lot wird beim Laser-Hartlöten mit externer Lotzufuhr seitlich außerhalb des Laserstrahls der Fügestelle zugeführt. Weiterhin wird über eine externe Zufuhreinrichtung ein Prozessgas zur Lötstelle geleitet. Eine derartige Anordnung zeigt beispielsweise die DE 10 2005 042 361 B4.

Die Druckschrift DE 102 13 676 A1 zeigt eine Vorrichtung zum punktuellen Löten, bei der die Lötstelle mit einer Lichtquelle erwärmt und das Lot in Form von Lotdraht zugeführt wird, wobei der Lotdraht in einem Führungsrohr zur Lötstelle geleitet wird. Dabei ist eine Blendkante zur Begrenzung des Wärmeeintrags in den Lotdraht vorgesehen, welche als eigenständiges und auf dem Führungsrohr verschiebbares Blendrohr ausgebildet sein kann. Weiterhin kann das Blendrohr so groß ausgelegt sein, dass sein Innendurchmesser größer ist als der Außendurchmesser des Führungsrohres, so dass durch den entstehenden Zwischenraum Schutzgas zur Lötstelle geleitet werden kann.

Es hat sich herausgestellt, dass es auch mit dieser bekannten Anordnung schwierig ist, Laserlötnähte mit einem zufriedenstellenden Ergebnis herzustellen. Oft lässt entweder die Oberflächenqualität oder die Festigkeit der Lötnaht zu wünschen übrig.

Aufgabe der vorliegenden Erfindung ist es, ein Laser-Hartlötverfahren mit externer Zufuhr des Lötdrahtes ohne separatem Flussmittel und mit einer externen Zufuhr eines Prozessgases so auszugestalten, dass sowohl eine ausreichende Festigkeit als auch eine gute Oberflächenqualität der Naht erzielt wird.

Weiterhin ist es Aufgabe der vorliegenden Erfindung, eine zur Durchführung des Verfahrens geeignete Vorrichtung vorzuschlagen.

Beide Aufgaben werden durch die Merkmale des ersten bzw. zweiten Anspruchs gelöst. Die Unteransprüche beschreiben vorteilhafte Ausgestaltungen der Erfindung.

Der Grundgedanke der Erfindung ist darin zu sehen, dass das Prozessgas nun nicht mehr separat über eine eigene Zuführungsleitung (DE 10 2005 042 361 B4) oder zusammen mit dem Laserstrahl (DE 102 35 822 A1) der Fügestelle zugeführt wird, sondern dass es zusammen mit dem Lotwerkstoff zur Fügestelle geleitet wird, also am Austritt des Lotwerkstoffes aus der Drahtauslassdüse den Lotwerkstoff quasi ummantelt, wobei auf dem Umfang der Zuführungsleitung vor der Auslassdüse Übertrittsöffnungen zum Übertritt des Prozessgases in die Auslassdüse vorgesehen sind. Dadurch wird eine Abschirmung des an der Fügestelle aufgeschmolzenen Lotes in der Fügestelle erreicht. Weiterhin treten keine Schmauchspuren auf und es ergibt sich eine blanke Lötnahtoberfläche. Somit werden auch praktisch keine Poren gebildet, die eine Nacharbeit erfordern würden.

Eine einfache Möglichkeit, das Prozessgas mit der Zuführeinrichtung für den Zusatzwerkstoff zu verbinden, beschreibt Anspruch 3.

Durch die Weiterbildung nach Anspruch 4 wird der Vorteil erreicht, dass sich das zwangsweise einseitig zugeführte Prozessgas auf dem gesamten Umfang der Drahtzuführleitung gleichmäßig verteilen kann.

Ein Übertritt des Prozessgases kann insbesondere durch einen axialen Abstand der Seele der Drahtzuführleitung von der Drahtauslassdüse erzielt werden oder - wie Anspruch 5 vorschlägt - durch einen separaten Einsatz zwischen der Seele und der Drahtauslassdüse, der auf seinem Umfang Übertrittsöffnungen aufweist, vorgenommen werden.

Anspruch 6 beschreibt einen vorteilhaften Aufbau eines einfach zu fertigenden Einsatzes.

Im Folgenden wird die Erfindung anhand eines bevorzugten Ausführungsbeispiels näher dargestellt.

Es stellen dar:
- Figur 1:: eine Prinzipskizze der erfindungsgemäß aufgebauten Laser-Hartlötanlage;
- Figur 2:: einen Längsschnitt durch ein erstes Ausführungsbeispiel der Erfindung;
- Figur 3:: einen Längsschnitt durch ein zweites Ausführungsbeispiel der Erfindung.

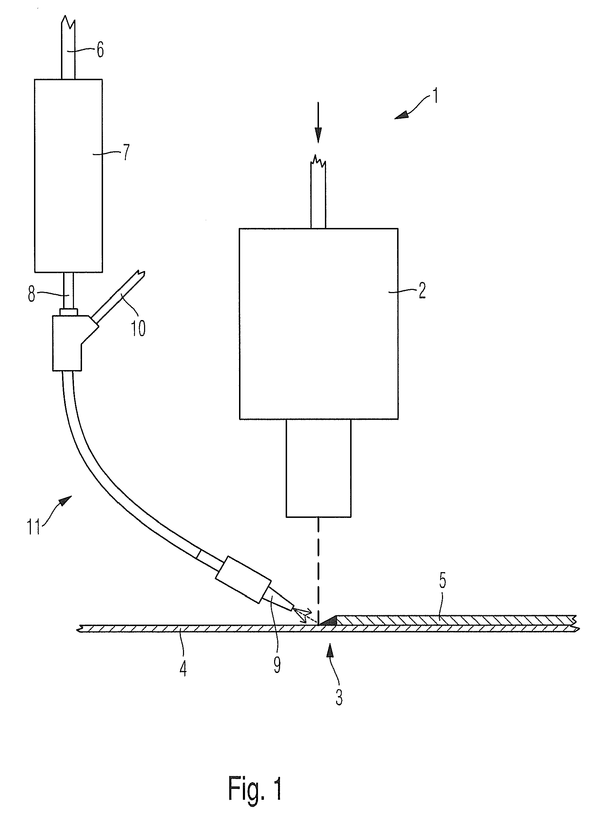

In Figur 1 ist eine Prinzipskizze der erfindungsgemäßen Anordnung einer Laser-Hartlötanlage 1 dargestellt. Mit bekannten Laserhartlötanlagen aus dem bekannten Stand der Technik hat sie gemein:
eine Lasererzeugungsanlage, deren Laserstrahl über eine Bearbeitungsoptik 2 austritt auf eine Fügestelle 3, an der zwei Bleche 4 und 5 mittels eines Lotwerkstoffes verbunden werden sollen;
als Lotwerkstoff einen Lötdraht 6, der aus einem nicht dargestellten Vorrat, üblicherweise einer Drahtrolle, über eine Drahtvorschubeinrichtung 7 und in einer extern außerhalb der Bahn des Lasers verlaufenden Drahtzuführleitung 8 zu einer Drahtauslassdüse 9 geführt wird, die unterhalb der Bearbeitungsoptik 2 im Bereich der Fügestelle 3 angeordnet ist
   sowie
einer Zuführleitung 10 für ein Prozessgas, das aus einem Gasvorrat zur Fügestelle 3 geleitet wird.

Im Gegensatz zum Stand der Technik wird das Prozessgas erfindungsgemäß über einen Teil der Drahtzuführleitung 8 und durch die Drahtauslassdüse 9 der Fügestelle 3 zugeführt, wobei das Prozessgas über Übertrittsöffnungen, die auf dem Umfang der Zuführungsleitung vor der Auslassdüse vorgesehen sind, der Auslassdüse zugeführt wird.

Nicht dargestellt und auch wieder allgemein üblich wird zur Führung der Bearbeitungsoptik gemeinsam mit der Drahtauslassdüse 9 ein Roboter verwendet. Hierzu sind die Gasauslassdüse 9 und die Bearbeitungsoptik 2 gemeinsam an dem freien Arm eines Roboters befestigt.

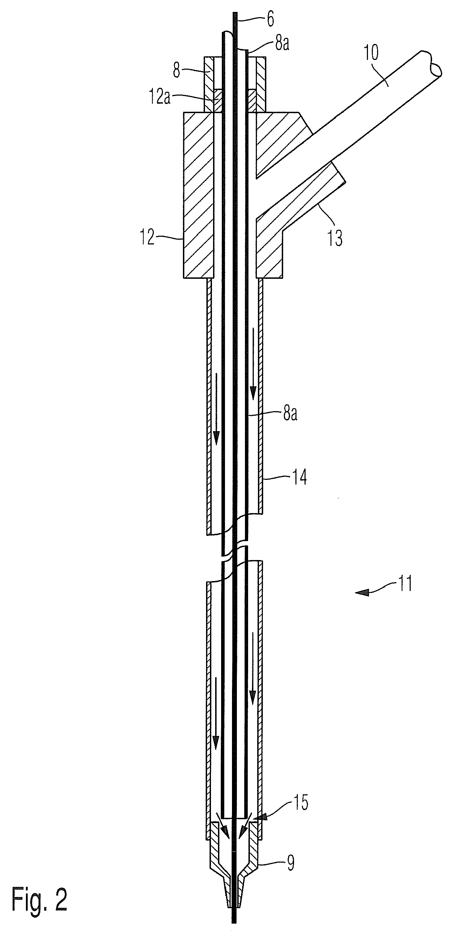

In Figur 2 ist ein schematisierter Längsschnitt durch ein erstes Ausführungsbeispiel der Erfindung dargestellt.

Der der Fügestelle 3 zugewandte vordere Bereich 11 der Drahtzuführleitung 8 für den Lötdraht 6 bis zur Drahtauslassdüse 9 besteht aus zwei koaxial zueinander verlaufenden Führungsleitungen. Im Inneren verläuft die Drahtzuführleitung 8. Sie wird umhüllt von der Zuführleitung 10 für das Prozessgas.

Wenn die Drahtzuführleitung 8 - wie allgemein üblich - doppelwandig mit einer Seele 8a zur Führung des Lötdrahtes 6 ausgestaltet ist, wird die äußere Umhüllung der Drahtzuführungsleitung im Bereich 11 durch einen Schutzschlauch 14 zum Führen des Prozessgases ersetzt.

Um die Zuführleitung 10 bzw. das in ihr geführte Prozessgas in den Schutzschlauch 14 und damit auf den Umfang der Seele 8a der Drahtzuführleitung 8 zu leiten, wird ein Verbindungsstück 12 verwendet, das auf der Strecke zwischen der Drahtvorschubeinrichtung 7 und der Drahtauslassdüse 9 auf die Drahtzuführleitung gesetzt wird.

Das Verbindungsstück 12 hat die Form einer Astgabel bzw. einer Abzweigung mit einem freien Anschlussstutzen 13. An diesem wird die Zuführleitung 10 für das Prozessgas, bevorzugt Argon oder Druckluft, angeschlossen.

Ein Rückströmen/Ausströmen des Prozessgases rückwärts aus dem Verbindungsstück 12 wird durch einen Dichtring 12a verhindert.

Der Schutzschlauch 14 ummantelt die Seele 8a der Drahtzuführungsleitung 8 bis zur Drahtauslassdüse 9, wo er dichtend abschließt. Er ummantelt die Seele 8a mit einem geringen Abstand und führt so das über den Anschlussstutzen 13 eingeleitete Prozessgas parallel zur Transportrichtung des Lötdrahtes 6 bis zur Drahtauslassdüse 9.

Auf dem Weg zwischen dem Verbindungsstück 12 und der Drahtauslassdüse 9 kann sich das Prozessgas gleichmäßig über den Umfang der Seele 8a verteilen.

Es tritt zu dem Umfang des Lötdrahtes 6 an dem vorderen Ende der Seele 8a am Beginn der Drahtauslassdüse 9. Hierzu sind auf dem Umfang der Seele 8a verteilt Übertrittsöffnungen angeordnet. Anstelle der Übertrittsöffnungen kann auch die Seele 8a kurz vor der Drahtauslassdüse 9 enden, so dass der so geschaffene Abstand zwischen dem Ende der Seele 8a und der Drahtauslassdüse 9 als Übertrittsöffnung 15 fungiert.

Üblicherweise ist hier ein nicht näher dargestelltes Gehäuse vorgesehen, in das die Drahtauslassdüse 9 einerseits eingeschraubt und die Seele 8a mit dem Schutzschlauch 14 andererseits befestigt ist. Dieses Gehäuse ist an der Bearbeitungsoptik 2 befestigt.

Somit ummantelt das Prozessgas in der Drahtauslassdüse 9 den Lötdraht 6 direkt und tritt gemeinsam mit ihm aus der Drahtauslassdüse 9 aus. Ein anderer Auslass für das Prozessgas als über die Drahtauslassdüse zusammen mit dem Lötdraht ist nicht vorgesehen.

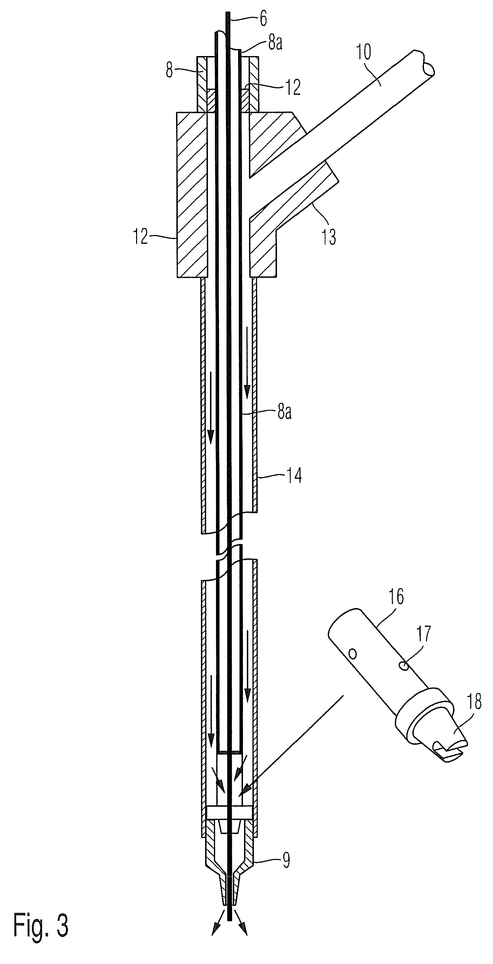

Das Ausführungsbeispiel nach Figur 3 unterscheidet sich von dem Ausführungsbeispiel nach Figur 2 durch das Vorsehen eines Einsatzes 16, der zwischen der Drahtauslassdüse 9 und der Seele 8a angeordnet ist. In ihm sind über seinen Umfang verteilt Übertrittsöffnungen 17 angeordnet, so dass weder Seele 8a verändert werden muss noch durch einen in seiner Größe mehr oder weniger dem Zufall überlassenen Spalt zwischen der Seele 8a und der Drahtauslassdüse 9 die Menge des überströmenden Prozessgases von Anlage zu Anlage variiert.

Der Einsatz 16 ist hohlzylinderförmig ausgestaltet mit einem düsenförmigen Mundstück 18 im Bereich der Drahtauslassdüse 9. Sein freier innerer Durchmesser ist so gewählt, dass neben dem freien Transport des Lötdrahtes 6 auch die benötigte Menge des Prozessgases ungehindert durch die Übertrittsöffnungen 17 zu der Drahtauslassdüse 9 strömen kann.

Der Einsatz 16 wird - wie auch die Drahtauslassdüse 9 - in das nicht näher dargestellte Gehäuse hintereinander eingeschraubt. Somit benötigt er keine Änderungen an dem Gehäuse. Er schließt mit seinem einlassseitigen Beginn mit der Seele 8a ab, so dass das Prozessgas nur durch die Übertrittsöffnungen 17 einströmen kann. Damit muss lediglich die Seele 8a an ihrem vorderen Ende entsprechend gekürzt werden.

Durch die Ummantelung des Lötdrahtes/Zusatzwerkstoffes durch das Prozessgas im Austrittszeitpunkt des Lötdrahtes aus der Drahtauslassdüse 9 wird eine Abschirmung des flüssigen Lotes in der Fügestelle 3 erzielt, so dass eine blanke Nahtoberfläche mit hoher Oberflächenqualität erzielt wird. Es entstehen keine Schmauchspuren an der Drahtauslassdüse und auch keine Lotspritzer. Damit entfallen eine Nacharbeit der Lötnaht und ein häufiges Reinigen der Drahtauslassdüse 9.

## Patentansprüche

1. Verfahren zum Laser-Hartlöten ohne Flussmittel mit einer externen Zufuhr eines Lotwerkstoffes, insbesondere eines Lötdrahtes (6), der von einem Vorrat an Lotwerkstoff über eine Transporteinrichtung durch eine Zuführungsleitung (8) bis in den Bereich der Fügestelle (3) geführt wird sowie mit einer Einrichtung zum externen Zuführen von Prozessgas zur Fügestelle (3), wobei das Prozessgas mit Abstand von der Fügestelle (3) zu der Zuführungsleitung (8) des Lotwerkstoffes geleitet wird und die Zuführungsleitung (8) von außen ummantelt, um dann kurz vor dem Austritt des Lotwerkstoffes aus der Zuführungsleitung (8) direkt zu dem Lotwerkstoff geleitet zu werden, so dass der Lotwerkstoff gemeinsam mit dem Prozessgas aus der Zuführungsleitung (8) über eine Auslassdüse (9) zur Fügestelle (3) austritt, **dadurch gekennzeichnet, dass** auf dem Umfang der Zuführungsleitung (8) vor der Auslassdüse (9) Übertrittsöffnungen (15) zum Übertritt des Prozessgases in die Auslassdüse (9) vorgesehen sind.

2. Vorrichtung zur Durchführung des Verfahrens nach Anspruch 1, mit einem Vorrat an Lotwerkstoff, der über eine Transportvorrichtung durch eine externe Zuführleitung (8) bis nahe an die Fügestelle (3) geführt ist und die Zuführungsleitung (8) über eine Auslassdüse (9) verlässt und mit einer Zuführleitung (10), durch die ein Prozessgas zu der Fügestelle (3) geführt werden kann, wobei die Zuführleitung (10) zum Zuführen des Prozessgases die Zuführungsleitung (8) vor der Auslassduese (9) ummantelt und in Strömungsrichtung vor der Auslassdüse (9) Übertrittsöffnungen (15) für das Prozessgas zu dem Lotwerkstoff vorgesehen sind, **dadurch gekennzeichnet, dass** die Übertrittsöffnungen (15) zum Übertritt des Prozessgases in die Auslassdüse (9) auf dem Umfang der Zuführungsleitung (8) ausgebildet sind.

3. Vorrichtung nach Anspruch 2,
**dadurch gekennzeichnet, dass** auf dem Umfang der Zuführungsleitung (8) ein Verbindungsstück (12) angeordnet ist, das einen Anschlussstutzen (13) für die Zuführleitung (10) zum Zuführen des Prozessgases aufweist.

4. Vorrichtung nach Anspruch 2 oder 3,
**dadurch gekennzeichnet, dass** die Zuführungsleitung (8) vom Verbindungsstück (12) bis zu der Auslassdüse (9) von einem äußeren Schutzschlauch (14) mit Abstand ummantelt ist.

5. Vorrichtung nach einem der vorangegangenen Ansprüche,
**dadurch gekennzeichnet, dass** ein separater Einsatz (16) vorgesehen ist, auf dessen Umfang mindestens eine Übertrittsöffnung (17) vorgesehen ist.

6. Vorrichtung nach Anspruch 5,
**dadurch gekennzeichnet, dass** der Einsatz (16) als hohlzylinderförmiger Körper mit einem düsenförmigen Mundstück (18) ausgebildet ist, der an der Zuführungsleitung (8) befestigt ist.

7. Vorrichtung nach einem der vorangegangenen Ansprüche,
**dadurch gekennzeichnet, dass** das Verbindungsstück (12) Y-förmig ausgestaltet ist.

## Claims

1. A method for laser brazing without fluxing agent with an external supply of a brazing material, especially a filler wire (6), which brazing material is guided from a supply of brazing material by a transportation device though a supply line (8) into the region of the joint (3) and with a device for eternally supplying process gas to the joint (3), wherein the process gas is conducted to the supply line (8) of the brazing material at a distance from the joint (3) and surrounds the supply line (8) from outside in order to then be conducted directly to the brazing material shortly before the brazing material issues from the supply line (8) so that the brazing material issues at the joint (3) together with the process gas from the supply line (8) via an outlet nozzle (9), **characterised in that** overflow openings (15) are provided on the periphery of the supply line (8) upstream of the outlet nozzle (9) for the passage of the process gas into the outlet nozzle (9).

2. A device for implementing the method according to claim 1, having a supply of brazing material which is guided close to the joint (3) through an external supply line (8) by a transportation device and leaves the supply line (8) via an outlet nozzle (9) and having a supply line (10) through which a process gas can be conducted to the joint (3), wherein the supply line (10) for supplying the process gas surrounds the supply line (8) upstream of the outlet nozzle (9), and overflow openings (15) for supplying the process gas to the brazing material are provided upstream of the outlet nozzle (9) in the direction of flow, **characterised in that** the overflow openings (15) for the passage of the process gas into the outlet nozzle (9) are formed on the periphery of the supply line (8).

3. A device according to claim 2,
**characterised in that** arranged on the periphery of the supply line (8) is a connection piece (12) which has a connecting branch (13) for the supply line (10) for supplying the process gas.

4. A device according to claim 2 or claim 3,
**characterised in that** the supply line (8) is surrounded at a spacing by an outer protective tube (14) from the connection piece (12) to the outlet nozzle (9).

5. A device according to any one of the preceding claims,
**characterised in that** a separate insert (16) is provided, on the periphery of which is provided at least one overflow opening (17).

6. A device according to claim 5,
**characterised in that** the insert (16) is configured as a hollow cylindrically-shaped body with a nozzle-shaped mouthpiece (18), which insert is attached to the supply line (8).

7. A device according to any one of the preceding claims,
**characterised in that** the connection piece (12) is Y shaped.

## Revendications

1. Procédé de brasage au laser sans fondant avec arrivée externe d'un matériau de brasage en particulier d'un fil de brasage (6), qui est transféré par l'intermédiaire d'un dispositif de transport, par une conduite d'alimentation (8) d'un réservoir de matériau de brasage jusqu'à la zone de l'emplacement de jointure (3), ainsi qu'un dispositif pour permettre l'arrivée externe d'un gaz de process vers l'emplacement de jointure (3), selon lequel le gaz de process est transféré vers la conduite d'alimentation (8) du matériau de brasage, à distance de l'emplacement de jointure (3) et enveloppe extérieurement la conduite d'alimentation (8) pour pouvoir ensuite peu avant la sortie du matériau de brasure de la conduite d'alimentation (8), être transféré directement vers le matériau de brasure de sorte que ce matériau de brasure sorte, avec le gaz de process de la conduite d'alimentation (8) par une buse de sortie (9) vers l'emplacement de jointure (3),
**caractérisé en ce que**
sur la périphérie de la conduite d'alimentation (8), en amont de la buse de sortie (9), sont prévues des ouvertures de passage (15) pour permettre le transfert du gaz de process dans la buse de sortie (9).

2. Dispositif permettant la mise en oeuvre du procédé conforme à la revendication 1,
comprenant un réservoir de matériau de brasage qui est conduit par l'intermédiaire d'un dispositif de transport, par une conduite d'alimentation externe (8) jusqu'à proximité de l'emplacement de jointure (3), et quitte la conduite d'alimentation (8) par une buse de sortie (9), ainsi qu'une conduite d'alimentation (10) au travers de laquelle un gaz de process peut être conduit à l'emplacement de jointure, la conduite d'alimentation (10) du gaz de process enveloppant la conduite d'alimentation (8) en amont de la buse de sortie (9), et, en amont de la buse de sortie (9) dans la direction d'écoulement sont prévues des ouvertures de passage (15) du gaz de process vers le matériau de brasure, **caractérisé en ce que**
les ouvertures de passage (15) du gaz de process dans la buse de sortie (9) sont réalisées sur la périphérie de la conduite d'alimentation (8).

3. Dispositif conforme à la revendication 2,
**caractérisé en ce que**
sur la périphérie de la conduite d'alimentation (8) est montée une pièce de liaison (12) qui comporte un embout de connexion (13) de la conduite d'alimentation (10) du gaz de process.

4. Dispositif conforme à la revendication 2 ou 3,
**caractérisé en ce que**
la conduite d'alimentation (8) est enveloppée à distance par un tuyau de protection externe (14) de la pièce de liaison (12) jusqu'à la buse de sortie (9).

5. Dispositif conforme à l'une des revendications précédentes,
**caractérisé en ce qu'**
il comporte un insert séparé (16) sur la périphérie duquel est prévue au moins une ouverture de passage (17).

6. Dispositif conforme à la revendication 5,
**caractérisé en ce que**
l'insert (16) est réalisé sous la forme d'un corps cylindrique creux muni d'un bec (18) en forme de buse qui est fixé à la conduite d'alimentation (8).

7. Dispositif conforme à l'une des revendications précédentes,
**caractérisé en ce que**
la pièce de liaison (12) est en forme de Y.
